# EUROPÄISCHE PATENTSCHRIFT

(11) **EP 2 224 217 B1**
(45) Veröffentlichungstag und Bekanntmachung des Hinweises auf die Patenterteilung: **11.06.2014**
(21) Anmeldenummer: 10152753.9
(22) Anmeldetag: 05.02.2010
(51) Int. Cl.: G01D 4/00, H04L 29/08

(54) **Verfahren und System zur Kommunikation eines ressourcenerzeugenden und/oder -verbrauchenden Gerätes mit einer zentralen Steuereinheit**
Device and method for a resource-generating and/or consuming device communicating with a central control unit
Procédé et système de communication d'un appareil produisant et/ou consommant des ressources et doté d'une unité de commande centrale

(30) Priorität: 27.02.2009 DE 102009010762; 16.10.2009 DE 102009049771
(43) Veröffentlichungstag der Anmeldung: 01.09.2010
(73) Patentinhaber: Technische Universität Dresden, 01069 Dresden (DE)
(72) Erfinder: Schöffel, Martin, 01069, Dresden (DE); Bether, Carsten, 02979, Elsterheide (DE)
(74) Vertreter: Adler, Peter

(56) Entgegenhaltungen:
- EP-A2- 1 217 475
- WO-A1-2008/118322
- DE-A1-102007 042 445
- US-A1- 2005 251 401
- US-A1- 2006 206 433
- US-A1- 2008 186 202
- US-B1- 6 553 418

## Beschreibung

Die Erfindung betrifft ein Verfahren zur Kommunikation zwischen einem Ressourcen-erzeugenden und/oder - verbrauchenden Gerät und einem anwenderseitigen Kommunikationsendgerät, wobei das anwenderseitige Kommunikationsendgerät über eine zentrale Steuereinheit unter Zwischenschaltung eines Netzwerkes und über ein Interface mit dem Ressourcen-erzeugenden und/oder -verbrauchenden Gerät verbunden ist, wobei von der zentralen Steuereinheit über das Internet Daten von dem Interface unter Nutzung des Internet Protokoll (IP) abgerufen werden und/oder Daten unter Nutzung des IP an das Interface gesendet werden.

Aufgrund der immer wertvoller werdenden natürlichen Ressourcen wie Wasser, Öl und Gas aber auch der erzeugten Energie ist es immer wichtiger, intelligente Systeme einzusetzen, die den Ressourcenverbrauch wie auch die Ressourcenerzeugung optimieren helfen sowie eindeutig Verbrauchern oder Erzeugern zugeordnet werden können. Dazu ist es nötig, den Verbrauch wie auch die Erzeugung von Ressourcen durch einzelne Geräte und Einrichtungen, ggf. benutzerbezogen, genau messen zu können und diese Daten, zusammen mit den Daten vieler anderer Geräte und Einrichtungen an zentraler Stelle auszuwerten, zu vergleichen und optimieren zu können. Die "European SmartGrids Technology Platform" beschreibt hierfür entsprechende Versionen.

Derzeit existieren eine Reihe von Verfahren und Systemen zur Fernerfassung der Daten sowie der daraus resultierenden Steuerung von Geräten und Einrichtungen. Häufig sind diese Systeme auf bestimmte Medien ausgerichtet und werden typischerweise von Medienversorgern eingesetzt.

Die DE202008016967U1 beschreibt eine Steuereinheit zum Energieflussmanagement von Stromverbrauch und Stromeinspeisung in Stromnetze. Dabei werden die Energieflüsse quantitativ durch Energiemengenzählung ferngesteuert über Internet erfasst und optimiert.

Systeme hingegen, die nicht auf bestimmte Medien ausgerichtet sind, erfordern einen relativ komplizierten Aufbau sowie Übersetzungen der übertragenen Informationen und/oder den parallelen Aufbau verschiedener Netze. Nur ein Teil dieser Systeme bietet die Möglichkeit, Anwendungen unter verschiedenen Nutzern nachvollziehbar zu teilen.

Als richtungweisend wird hierfür die EP1185030B1 genannt, in der ein Verfahren und System zum Fernsteuern von Haushaltsgeräten über das Internet beschrieben wird. Dabei werden die zu steuernden Geräte über ein zentrales Steuergerät (bzw. mehrere zentrale Steuergeräte) angesprochen, an das sie jeweils über separate Leitungen angeschlossen sind und das mittels Intranet- und Internetverbindung mit einem zentralen Rechner verbunden ist. Das System bietet die Möglichkeit, mehreren Benutzern mit unterschiedlichen Zugriffsberechtigungen den Zugriff auf das System bzw. einen Teilbereich des Systems zu gewähren, wobei hier der Zentralrechner die Funktion der Zugriffssteuerung inne hat.

Die DE000069925274T2 beschreibt ein Verbindungsverfahren für Internetdienste zur Fernsteuerung einer Vorrichtung, das ein System nutzt, das eine erste Steuereinrichtung, die mit der Vorrichtung kommuniziert, sowie eine zweite Steuereinrichtung, die mit der ersten kommuniziert, enthält.

Sie beschreibt außerdem Lösungen zur nutzerfreundlichen Gestaltung eines solchen Verfahrens, insbesondere die Möglichkeit zur Programmierung des Abfragemodus der Vorrichtungen und der Kommunikation von Subsystemen untereinander.

Die US2008/186202A1 beschreibt im Wesentlichen ein Monitoringsystem für definierte Ressourcen, das ggf. auch mit einzelnen Geräten kommunizieren kann, sofern diese dafür extra ausgerüstet sind. Hierzu ist jedoch das Zusammenwirken verschiedener Elemente bzw. Einheiten nötig. Eine einfache, direkte gerätespezifische Kommunikation und Steuerung einzelner Geräte ermöglicht diese Lösung nicht.

Die W02008/118322A1 beschreibt ebenfalls eine Möglichkeit zur Kontrolle von verschiedenen Ressourcen auf eine kompakte und einfache Art und Weise. Die Frage der konkreten Steuerung einzelner Geräte, die eine oder mehrere dieser Ressourcen erzeugen und oder verbrauchen wird jedoch nicht betrachtet.

Auch in der US6553418B1 wird ein System beschrieben, mit dem der Ressourcenverbrauch oder ggf. die Erzeugung einzelner Ressourcen kontrolliert wird und ggf. in Spitzenzeiten ausgeglichen werden kann durch die entsprechende Zuschaltung eines zusätzlichen Ressourcen-"Generators".

Aus der EP 1217475 A2 ist ein Verfahren zur Kommunikation zwischen einem Ressourcen- erzeugenden und/oder - verbrauchenden Gerät und einem anwenderseitigen Kommunikationsendgerät bekannt, bei welchem eine Verbindung zwischen dem anwenderseitigen Kommunikationsendgerät und dem Haushaltgerät, als Ressourcen- erzeugendes und/oder - verbrauchendes Gerät, über eine drahtlose Verbindung zu einem ersten Netzwerkprozessor 10 und von diesem drahtgebunden zu einem mit dem Haushaltgerät "A" oder "B" verbundenem zweiten Netzwerkprozessor 20 erfolgt. Alternativ kann die Verbindung vom anwenderseitigen Kommunikationsendgerät nur über das Internet zum Haushaltgerät selbst erfolgen, wobei diesem ein Lokalserver und ein Sende/Empfangsmodul vorgeschaltet ist.

Die hier beschriebenen Systeme bedienen sich alle zwischengeschalteter zusätzlicher, eigenständiger Monitoring-Geräte, die zumeinst über ein erstes, äußeres Netz, z.B. Internet, mit einer zentralen Speicherungs-, Auswerte- und Steuereinheit kommunizieren, andererseits über ein internes Netz die Daten einzelner Geräte und Einrichtung abfragen bzw. Steuerbefehle der zentralen Steuereinheit an diese weitergeben. Dies macht die entsprechenden Systeme aufgrund der Anzahl seiner Bauteile sehr aufwändig und die Kommunikation kompliziert, da ggf. Übersetzungen nötig sind. Außerdem ist bei diesem Aufbau eine konkrete Steuerung einzelner Geräte meist gar nicht, in einigen Fällen über eine zusätzliche geräteinterne Steuermöglichkeit möglich, sofern diese schon existent und von außen ansteuerbar ist. Einzelne Funktionen der Geräte sind nur beschränkt ansprechbar.

Aufgabe der Erfindung ist es nun, ein Verfahren und System zur Kommunikation zwischen einzelnen Ressourcen-erzeugenden und/oder -verbrauchenden Geräten und einem anwenderseitigem Kommunikationsendgerät über eine zentrale Steuereinheit anzugeben, das bei einer breiten und kostengünstigen Nutzungsmöglichkeit verschiedenste zu monitorende und zu steuernde Medien mit geringem Aufwand verwalten und die entsprechenden diese Ressourcen erzeugenden und/oder verbrauchenden Geräte direkt steuern kann sowie ggf. deren Ressourcenerzeugung oder -verbrauch Benutzerkonten zuordnen kann.

Die vorliegende Erfindung löst diese Aufgabe durch ein Verfahren mit den Merkmalen des Anspruches 1 und eine Anordnung nach Anspruch 11. Die Unteransprüche 2 bis 10 sowie 12 bis 18 zeigten günstige Ausgestaltungen des erfindungsgemäßen Verfahrens und der Anordnung.

Das erfindungsgemäße Verfahren bezieht sich auf eine Kommunikation zwischen einem Ressourcen-erzeugenden und/oder -verbrauchenden Gerät und einem anwenderseitigen Kommunikationsendgerät, wobei sich als Kommunikationsendgerät jedes Gerät eignet, das die Möglichkeit hat, nach dem Internet Protokoll Daten zu empfangen und zu senden. Als Beispiele seien hier mobile Computer (Laptops), internetfähige Mobiletelefone, elektronische Bilderrahmen oder Personalcomputer genannt. Dabei ist das anwenderseitige Kommunikationsendgerät über eine zentrale Steuereinheit unter Zwischenschaltung eines Netzwerkes mit dem Ressourcen-erzeugenden und/oder - verbrauchenden Gerät verbunden. Alternativ ist auch ein direkter Zugriff von der zentralen Steuereinheit aus möglich. In diesem speziellen Fall wäre dann die zentrale Steuereinheit gleichzeitig auch das Kommunikationsendgerät. Von der zentralen Steuereinheit, die in der Regel durch einen zentralen Rechner realisiert wird, werden über das Internet Daten von dem Interface unter Nutzung des Internet Protokoll abgerufen und/oder Daten unter Nutzung des IP an das Interface gesendet. Dabei ist das Interface einem einzigen Ressourcen-erzeugenden und/oder -verbrauchenden Gerät zugeordnet und jedem Ressourcen-erzeugenden oder - verbrauchenden Gerät wird eine eigene IP Adresse zugeordnet.

Im Gegensatz zum Stand der Technik wird es somit möglich, dass die zentrale Steuereinheit mit jedem einzelnen Ressourcen-erzeugenden und/oder -verbrauchenden Gerät direkt und über ein einziges Netz in Verbindung tritt. Eine Übersetzung in ein Intranet ist nicht erforderlich. Auch ist jedes Gerät von außen direkt adressierbar.

Um einen flexiblen Anschluss der Geräte bzw. deren Interfaces an das Internet zu erreichen, wird zwischen das oder die Interfaces und einem in der Regel drahtgebunden Internet das erste Stück als drahtlose Verbindung realisiert, indem in einer günstigen Ausgestaltung des Verfahrens vorgesehen ist, dass die Verbindung zwischen dem Interface und der zentralen Steuereinheit über eine erste IP-basierte drahtlose Verbindung zu einem Gateway und über dieses in das Internet erfolgt.

Sind mehrere Ressourcen-erzeugende und/oder -verbrauchende Geräte vorhanden, denen jeweils entsprechende Interfaces zugeordnet sind, dann erweist es sich als vorteilhaft, dass jedes dieser Interfaces direkt mit jedem anderen Interface kommunizieren kann, so dass die Daten der jeweiligen Ressourcen-erzeugenden und/oder -verbrauchenden Geräte untereinander empfangen und weitergegeben werden können. Damit ist gewährleistet, dass auf ein Ressourcen-erzeugende s und/oder -verbrauchendes Gerät auch dann zugegriffen werden kann, wenn sich an der entsprechenden Stelle, an dem sich das Gerät mit seinem Interface befindet, keine Verbindung mit dem Internet und auch keine drahtlose IP basierte Verbindung zu einem Gateway aufbauen lässt.

In zwei konkreten günstigen Ausgestaltungen kann die Kommunikation zwischen den Interfaces der einzelnen Ressourcen-erzeugenden und/oder -verbrauchenden Geräte zum Beispiel über ein Funknetz oder eine Feldbusverbindung aufgebaut werden. Der Art der Kommunikation zwischen den Interfaces einzelner Geräte ist dabei als einzige Grenze gesetzt, dass ein Übergang von der spezifischen Kommunikationsverbindung der Interfaces der Ressourcen-erzeugenden und/oder -verbrauchenden Geräte untereinander zu einer Internet Protokoll basierten Verbindung an mindestens einer Stelle, d.h. an mindestens einem Interface eines beliebigen Gerätes möglich sein muss. Auch jede in Zukunft denkbare neue Kommunikationsmöglichkeit der Interfaces untereinander ist einsetzbar, sofern von ihr aus eine Übertragung der Daten in eine IP basierte Verbindung möglich ist.

In bevorzugter Ausführung arbeitet die IP basierte Verbindung dabei nach dem Internetprotokoll IPv6 oder einer höheren Version, da dies eine wesentlich detailliertere Adressierbarkeit erlaubt als ältere Versionen, für die nur eine kleinere Anzahl von IP-Adressen zur Verfügung steht. Damit kann auch bei einer sehr großen Anzahl von zu steuernden Ressourcen-erzeugenden und/oder -verbrauchenden Geräten jedes Interface eines jeden Gerätes mit einer konkreten ihm eigenen Adresse angesprochen werden, was das zu diesem Interface gehörige Gerät einzeln ansteuerbar und die Daten einzeln abrufbar macht.

Idealerweise kann die zentrale Steuereinheit, die alle Nutzerdaten als auch alle Erzeugungs- und Verbrauchsdaten für jedes Ressourcen-erzeugende und/oder -verbrauchende Gerät bei dem genutzten Verfahren übermittelt bekommt, die von dem Interface eines Ressourcen-erzeugenden und/oder - verbrauchenden Gerätes erhaltenen Messdaten aufarbeiten, speichern, auswerten und infolge der Auswertung dieser Daten oder aufgrund von manuell erhaltener Eingaben den Zustand des fernerfassten und/oder fernzusteuernden Gerätes ändern.

Eine Änderung des Zustands des fernerfassten Gerätes ist dabei genau dann durch eine automatische Auswertung der erhaltenen und aufgearbeiteten Messdaten möglich, wenn die vorteilhafte Option genutzt wird, Aktionen zu hinterlegen, die in Abhängigkeit der erhaltenen Ergebnisse der Auswertung der Daten des Gerätes durch die zentrale Steuereinheit durchgeführt werden.

Durch die eindeutige Adressierbarkeit der Geräte besteht in bevorzugter Ausgestaltung des Verfahrens die Möglichkeit, dass jedem Ressourcen-erzeugenden und/oder -verbrauchenden Gerät zu jedem Zeitpunkt ein Benutzerkonto zugeordnet werden kann und umgekehrt. Jedem Benutzerkonto kann somit jeweils der Gewinn oder Verbrauch einer Ressource zugeordnet werden. Das erlaubt den Zugriff verschiedener Nutzer auf ein und dasselbe Gerät zu unterschiedlichen Zeiten, der eindeutig aufgeschlüsselt werden kann.

In einer günstiger Ausführungsform des Verfahrens wird bei der Übertragung aller Daten die Informationssicherheit der Verbindung und die Vergabe von Zugriffsrechten durch ein asymmetrisches Verschlüsselungsverfahren gewährleistet. Dabei können unterschiedlichen Benutzerkonten unterschiedliche Zugriffsrechte eingeräumt werden. Die Zugriffsrechte werden dabei in der zentralen Steuereinheit verwaltet, die Validierung erfolgt dann am Gerät.

Verbrauchte oder erzeugte Ressourcen können in dem hier verwendeten Verfahren jeweils ressourcenspezifisch gemessen, die Ressourcen-erzeugenden und/oder -verbrauchenden Geräte jeweils gerätespezifisch gesteuert und die Daten bzw. Befehle universell nach ein und demselben Verfahren zwischen den jeweiligen Ressourcen-erzeugenden und/-oder verbrauchenden Geräten und der zentralen Steuereinheit kommuniziert werden. Realisiert wird dies, indem jedes Interface, das einem Ressourcen-erzeugenden und/oder - verbrauchenden Gerät zugeordnet ist, modular aufgebaut ist: Bevorzugt auf einem Board wird dazu im Interface ein ressourcenspezifisches Messmodul, ein gerätespezifisches Steuermodul und ein universelles Kommunikationsmodul angeordnet.

Um den Datenaustausch effektiv zu gestalten, kann in einer bevorzugten Ausgestaltung des Verfahrens das Messen und die Übermittlung der erzeugten und/oder verbrauchten Ressourcen eventbasiert erfolgen, das heißt, nur eine Änderung im System führt zu einer entsprechenden Aktion.

Mit dem beschriebenen Verfahren kann in bevorzugter Ausführungsform mindestens eine der Ressourcen elektrische Energie, Gas, Öl, Wasser und Wärme gemessen, übermittelt, ausgewertet und beeinflusst werden. In der Regel werden jedoch mehrere Ressourcen gleichzeitig erfasst.

Das hier beanspruchte Kommunikationssystem enthält mindestens ein Ressourcen-erzeugende sund/oder - verbrauchendes Gerät mit nur diesem einem dem Gerät zugeordneten Interface, sowie einer zentralen Steuereinheit und ein anwenderseitiges Kommunikationsendgerät. Kennzeichnend für das Interface ist dabei des Weiteren, dass es ein ressourcenspezifisches Messmodul, ein gerätespezifische Steuermodul und ein universelles Kommunikationsmodul enthält und einen IP fähigen Zugang aufweist.

Damit erreicht man mit einer geringen Anzahl von ressourcenspezifischen Messmodulen, gerätespezifischen Steuermodulen und dem Kommunikationsmodul jede nötige Kombination der drei Module, ohne das für jedes neue Ressourcen-erzeugende und/oder -verbrauchende Gerät ein komplett neues Design der Module oder des Interfaces nötig ist. Bei Erzeugung oder Verbrauch mehrerer Ressourcen in einem Gerät können dabei mehrere jeweils ressourcenspezifische Messmodule in ein und demselben Interfaces eingesetzt werden.

Das Kommunikationssystem ist dabei ob seiner Anzahl an Ressourcen-erzeugenden und/oder -verbrauchenden Gerät und ihnen zugeordneten Interfaces nicht nach oben beschränkt.

Das ressourcenspezifische Messmodul bzw. die ressourcenspezifischen Messmodule, das gerätespezifische Steuermodul und das universelles Kommunikationsmodul können dabei in einer bevorzugten Ausgestaltung auf einem Board des Interfaces angeordnet werden.

Dabei weisen die Interfaces der Ressourcen-erzeugenden und/oder -verbrauchenden Geräte des erfindungsgemäßen Kommunikationssystems in einer Ausführungsform zusätzlich zu den Kommunikationsmitteln, die für die Kommunikation mit der zentralen Steuereinheit bestimmt sind, Mittel zum direkten Empfang und zur direkten Weitergabe von Daten von und zu jeder anderen dieser Interfaces auf, um zu gewährleisten, dass die Interfaces auch untereinander kommunizieren können. Dies ermöglicht den Aufbau einer Kommunikation auch mit den Geräten, die aufgrund ihrer örtlichen Lage keinen direkten IP basierten Zugang, d.h. auch keinen drahtlosen Zugang, zum Internet aufbauen können.

In bevorzugten Ausgestaltungen können dabei die Mittel zum direkten Empfang und zur direkten Weitergabe von Daten von einem Interface zu jedem anderen dieser Interfaces eine Funkverbindung, eine Feldbusverbindung. Selbstverständlich ist auch direkt eine Verbindung nach dem IP möglich. Der Art der Kommunikationsmittel zwischen den Interfaces einzelner Geräte ist dabei als einzige Grenze gesetzt, dass ein Übergang von der spezifischen Kommunikationsverbindung der Interfaces der Ressourcen-erzeugenden und/oder - verbrauchenden Geräte untereinander zu einer Internet Protokoll basierten Verbindung an mindestens einer Stelle, d.h. an mindestens einem Interface eines beliebigen Gerätes möglich sein muss. Auch jede in Zukunft denkbare neue Kommunikationsart der Interfaces untereinander ist somit verwendbar, sofern mit sie eine Übertragung der Daten in eine IP basierte Verbindung ermöglicht.

In bevorzugter Ausführungsform des erfindungsgemäßen Kommunikationssystems besitzt die darin enthaltene zentrale Steuereinheit Mittel zur Speicherung, Aufarbeitung und Auswertung der vom Interface übermittelten Messdaten der Ressourcen-erzeugenden und/oder -verbrauchenden Geräte sowie Mittel zum Eingriff und zur Veränderung des Zustands der dadurch erfassten Ressourcen-erzeugenden und/oder - verbrauchenden Geräte. Dabei seien die Mittel zum Eingriff nicht nur auf den Eingriff durch manuellen Befehle beschränkt, sondern sollen auch die Option der Hinterlegung von automatischen Befehlen und Aktionen in Abhängigkeit der erhaltenen Ergebnisse der durch die zentrale Steuereinheit durchgeführten Auswertung der Daten der jeweils Ressourcen-erzeugenden und/oder -verbrauchenden Geräte beinhalten.

In einer Ausgestaltung des erfindungsgemäßen Kommunikationssystems ist eine direkte und eineindeutige Zuordnung des Ressourcen-erzeugenden und/oder - verbrauchenden Gerätes zu einem Benutzerkonto möglich, da das Interface, das dem Ressourcen-erzeugenden und/oder - verbrauchenden Gerät eindeutig zugeordnet ist, seine eigene, eindeutig identifizierbare IP Adresse aufweist, so dass damit jedes Ressourcen-erzeugenden und/oder -verbrauchenden Gerät, das mit einem solchen Interface ausgestattet ist, sozusagen seine eigene IP-Adresse hat und eindeutig identifizierbar und damit einzeln ansteuerbar bzw. abrufbar ist.

Das erfindungsgemäße Kommunikationssystem enthält in einer bevorzugten Ausführungsform des Weiteren Mittel zur zentralen Aktualisierung der Firmware auf allen Ressourcen-erzeugenden und/oder -verbrauchenden Geräten. Dies wird durch den direkten Zugriff der zentralen Steuereinheit auf alle Interfaces der im System befindlichen Ressourcen-erzeugenden und/oder -verbrauchenden Geräte zu jedem nötigen Zeitpunkt realisiert.

Je nach Ausgestaltung ist mit dem erfindungsgemäßen Kommunikationssystem die gleichzeitig Erfassung, Auswertung und Steuerung so unterschiedliche Ressourcen wie elektrischer Energie, Gas, Öl, Wasser und Wärme in verschiedensten Anwendungen und Bereichen wie in Personen- oder Gütertransportmitteln, Haushaltsgeräten, oder Produktionsanlagen in öffentlichen Gebäuden, privaten Haushalten, in Handel oder in Produktionsbetrieben möglich.

Nachfolgend wird die Erfindung anhand eines Ausführungsbeispieles näher erläutert. Die zugehörige Zeichnung zeigt die Prinzipdarstellung eines Systems, das mit dem erfindungsgemäßen Verfahren arbeitet.

In einem Haus werden die Erzeugung und der Verbrauch verschiedener Ressourcen mehrerer Haushaltsgeräte und Einrichtungen über eine zentrale Steuereinheit 6 erfasst und gesteuert. Diese Erfassung soll den jeweiligen Benutzern 8 zugeordnet werden.

In diesem Beispiel seien eine Vielzahl von Hausgeräten und Einrichtungen erfasst, zu denen unter anderem eine Waschmaschine 1a mit dem zu messenden und steuernden Wasser- und Stromverbrauch, sowie ein kombinierter Elektro/Gas-Küchenherd 1b mit dem zu messenden und steuernden Gas- und Stromverbrauch gehört. Die Geräte werden von einer im Haus befindlichen zentralen Steuereinheit 6 (hier ein leistungsfähiger Personal- Computer) gesteuert, auf dem neben anderen Möglichkeiten mit einem internetfähigen Mobiletelefon 7a und einem mobilen Computer 7b zugegriffen werden kann.

Das Interface 2 der Waschmaschine 1a enthält auf einem Board vier Module: zwei ressourcenspezifische Messmodule 3 für jeweils für die Ressource "Wasser" und "Strom", ein gerätespezifisches Steuermodul 4 für die Gerätegruppe "Waschmaschinen" 1a und ein universelles Kommunikationsmodul (5), das den einheitlichen Zugriff zum Gerät, unabhängig von den gerätespezifischen Gegebenheiten bietet, und den IP fähigen Zugang sowie alle für eine Funkverbindung 12 notwendigen Komponenten enthält.

Das Interface 2 der Küchenherds 1b enthält wiederum auf einem Board vier Module: zwei ressourcenspezifische Messmodule 3 für jeweils für die Ressource "Gas" und "Strom", wobei das Messmodul für die Ressource "Strom" das gleiche ist wie das im Interface 2 der Waschmaschine 1a, ein gerätespezifisches Steuermodul 4 für die Gerätegruppe "Küchenherd" 1b und ein universelles Kommunikationsmodul 5, das wiederum den einheitlichen Zugriff zum Gerät, und sowohl einen IP fähigen Zugang sowie einen Zugang über Funknetz bietet und das gleiche ist, wie das Kommunikationsmodul 5 in der Waschmaschine 1a.

Die Waschmaschine 1a hat in unserem Beispiel keinen direkten drahtlosen Zugang 10 zum Internet, da sie sich aufgrund eines ungünstigen Standortes nicht im Einzugsbereich eines entsprechenden Gateways 9 befindet. Der Küchenherd 1b hingegen hat über den Gateway 9 einen drahtlosen Zugang 10 zum Internet. Deshalb wird der Küchenherd 1b in diesem Fall von der Waschmaschine 1a und der zentralen Steuereinheit 6 als Weitergabestation von Messdaten von und Befehlen zur Waschmaschine 1a über das Funknetz genutzt.

Beide Geräte haben hierbei jeweils eigene eindeutige IP Adressen, das gesamte System arbeitet nach dem Internet Protokoll V6. Verschiedene Benutzer 8 der Geräte des Hauses haben hierbei unterschiedliche Benutzerkonten, so dass jeweils registriert wird, welcher Benutzer 8 gerade das entsprechende Gerät und damit die entsprechenden Ressourcen nutzt, so dass sie ihm dann korrekt in Rechnung gestellt werden können, oder im Problemfall deren Nutzung untersagt werden kann. Die Regeln dazu sind in der zentralen Steuereinheit 6 hinterlegt, die Verbrauchsdaten werden zu dieser zentralen Steuereinheit 6 übermittelt, dort gespeichert und ausgewertet. Die Nutzung eines Gerätes wie z.B des Küchenherdes 1b durch Benutzer eins 8a schließt dabei über die in der zentralen Steuereinheit 6 hinterlegten Regeln die gleichzeitige Nutzung dieses Gerätes durch Nutzer zwei aus. Soll der Küchenherd 1b vor der eigentlichen Nutzung schon vorgeheizt werden oder mit dem Garprozess einer dort deponierten Mahlzeit schon begonnen werden, obwohl der Benutzer eins 8a noch nicht vor Ort ist, so gibt er die entsprechenden Befehle über ein Kommunikationsendgerät 7 wie z.B. einem internetfähigen Mobiltelefon 7a, das Kontakt zu der zentralen Steuereinheit 6 hat, der wiederum den Zustand des Küchenherdes 1b entsprechend ändert, indem er ihn für den Benutzer eins 8a freischaltet (und somit die Nutzung durch Benutzer zwei 8b, der zum selben Zeitpunkt über seinen mobilen Computer 7b zugreifen möchte, nicht zulässt) und den Strom- bzw.

Gasverbrauch entsprechend einstellt und anhand von Messdaten nachregelt. Die entsprechenden Daten sowohl zum Verbrauch als auch zum Benutzer 8 werden dabei entsprechend verschlüsselt, so das beispielsweise Benutzer zwei 8b nicht in den Daten des Benutzers eins 8a eingreifen kann. Gibt es Aktualisierungen in dem hier beschriebenen Haussystem, dann wird die neue Firmware in der zentralen Steuereinheit 6 eingespielt und dann von diesem auf die Geräte weitergegeben.

Generell geben alle Geräte des hier beschriebenen Systems Meldung an die zentrale Steuereinheit 6, wenn eine Änderung ihres Zustands bezüglich der überwachten Ressourcen eintritt.

### Bezugszeichenliste

- 1: Ressourcen-erzeugende s und/oder -verbrauchendes Gerät
- 1a: Waschmaschine
- 1b: Küchenherd
- 2: Interface
- 2a: Interface der Waschmaschine
- 2b: Interface des Küchenherds
- 3: ressourcenspezifisches Messmodul
- 3a: Messmodul für Stromverbrauch oder -erzeugung
- 3b: Messmodul für Wasserverbrauch (oder -erzeugung)
- 3c: Messmodul für Gasverbrauch (oder -erzeugung)
- 4: gerätespezifisches Steuermodul
- 4a: Steuermodul für Waschmaschinen
- 4b: Steuermodul für Küchenherde
- 5: universelles Kommunikationsmodul
- 6: zentrale Steuereinheit
- 7: Kommunikationsendgerät
- 7a: internetfähiges Mobiltelefon
- 7b: mobiler Computer
- 8: Benutzer
- 8a: Benutzer eins
- 8b: Benutzer zwei
- 9: Gateway
- 10: drahtlose Internetverbindung
- 11: drahtgebundene Internetverbindung
- 12: Funkverbindung
- 13: Übertragungsweg
- 13a: Übertragungsweg für Anfrage des Benutzers eins
- 13b: Übertragungsweg für Anfrage des Benutzers zwei

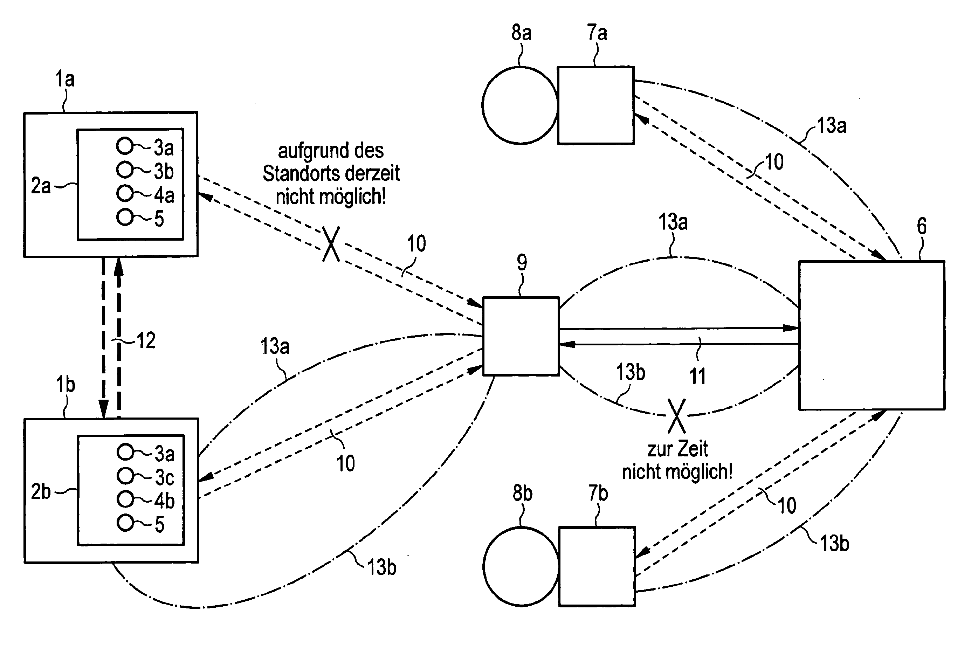

## Patentansprüche

1. Verfahren zur Kommunikation zwischen einem Ressourcenerzeugenden und/oder -verbrauchenden Gerät (1) und einem anwenderseitigen Kommunikationsendgerät (7), wobei das anwenderseitige Kommunikationsendgerät (7) über eine zentrale Steuereinheit (6) unter Zwischenschaltung eines Netzwerkes und über ein Interface (2) mit dem Ressourcenerzeugenden und/oder -verbrauchenden Gerät (1) verbunden ist, wobei von der zentralen Steuereinheit (6) über das Internet Daten von dem Interface (2) unter Nutzung des Internet Protokoll, IP, abgerufen werden und/oder Daten unter Nutzung des IP an das Interface (2) gesendet werden wobei das Interface (2), welches ein ressourcenspezifisches Messmodul (3), ein gerätespezifisches Steuermodul (4) und ein universelles Kommunikationsmodul beinhaltet, einem einzigen Ressourcenerzeugenden und/oder -verbrauchenden Gerät (1) zugeordnet ist und einem Ressourcen-erzeugenden oder -verbrauchenden Gerät (1) eine eigene IP Adresse zugeordnet wird, die Verbindung zwischen dem Interface (2) und der zentralen Steuereinheit (6) über eine erste IP-basierte drahtlose Verbindung (10) zu einem Gateway (9) und über diesen in das Internet über eine drahtgebundene Verbindung (11) erfolgt, die Verbindung zwischen der zentralen Steuereinheit (6) und dem anwenderseitigen Kommunikationsendgerät (7) über eine zweite IP-basierte drahtlose Verbindung (10) erfolgt, die zentrale Steuerung (6) die Daten speichert und auswertet und die ausgewerteten Daten zur Übertragung an ein anwenderseitiges Kommunikationsendgerät (7) bereitstellt, welches über die zentrale Steuerung (6) mit dem Ressourcen-erzeugenden und/oder -verbrauchenden Gerät (1) verbunden ist und mittels in der zentralen Steuereinheit (6) hinterlegter Aktionen, in Abhängigkeit der Ergebnisse der automatischen Auswertung der Daten, eine Zustandsänderung des Ressourcenerzeugenden und/oder - verbrauchenden Gerätes (1) bewirkt wird.

2. Verfahren nach Anspruch 1, **dadurch gekennzeichnet, dass** bei Vorhandensein von mehr als einem Ressourcen-erzeugenden und/oder -verbrauchenden Gerät (1) und seines Interfaces (2) jedes dieser Interfaces (2) direkt mit jedem anderen kommuniziert und dabei Daten empfängt und weitergibt.

3. Verfahren nach Anspruch 2, **dadurch gekennzeichnet, dass** die Kommunikation zwischen den Interfaces (2) der Ressourcen-erzeugenden und/oder -verbrauchenden Geräte (1) über ein Funknetz, eine Feldbusverbindung oder über das Internet aufgebaut wird.

4. Verfahren nach einem der Ansprüche 1 bis 3, **dadurch gekennzeichnet, dass** zum Abrufen von Daten vom Interface (2) und/oder zum Senden von Daten an das Interface (2) eines Ressourcen-erzeugenden und/oder -verbrauchenden Gerätes (1) nach dem Internetprotokoll IPv6 oder einer höheren Version gearbeitet wird.

5. Verfahren nach einem der Ansprüche 1 bis 4, **dadurch gekennzeichnet, dass** die zentrale Steuereinheit (6) die von dem Interface (2) eines Ressourcen-erzeugenden und/oder -verbrauchenden Gerätes (1) erhaltenen Messdaten aufarbeitet, auswertet und infolge der Auswertung oder aufgrund von manuell erhaltener Eingaben den Zustand des fernerfassten und fernzusteuernden Gerätes zu ändern vermag.

6. Verfahren nach einem der Ansprüche 1 bis 5, **dadurch gekennzeichnet, dass** jedem Gerät über sein Interface (2) und der zentralen Steuereinheit (6) ein Benutzerkonto zugeordnet wird und umgekehrt.

7. Verfahren nach einem der Ansprüche 1 bis 6, **dadurch gekennzeichnet, dass** die Informationssicherheit der Verbindung, die Vergabe von Zugriffsrechten und die Identifikation von Benutzern (8) durch ein asymmetrisches Verschlüsselungsverfahren gewährleistet wird.

8. Verfahren nach einem der Ansprüche 1 bis 7, **dadurch gekennzeichnet, dass** mit dem dem Ressourcenerzeugenden und/oder -verbrauchenden Gerät (1) zugeordneten Interface (2) verbrauchte oder erzeugte Ressourcen ressourcenspezifisch gemessen, geräte- bzw. einrichtungsspezifisch gesteuert und universell, d.h. mit immer gleichen Mitteln, kommuniziert werden.

9. Verfahren nach einem der Ansprüche 1 bis 8, **dadurch gekennzeichnet, dass** das Messen der verbrauchten und/oder erzeugten Ressourcen eventbasiert erfolgt.

10. Verfahren nach einem der Ansprüche 1 bis 9, **dadurch gekennzeichnet, dass** dabei mindestens eine der Ressourcen elektrische Energie, Gas, Öl, Wasser, Wärme und Kälte gemessen wird.

11. Kommunikationssystem, das ein Ressourcen-erzeugendes und/oder -verbrauchendes Gerät (1), ein Interface (2), eine zentralen Steuereinheit (6) und ein anwenderseitiges Kommunikationsendgerät (7) enthält, wobei das Interface (2) nur diesem einen Ressourcen-erzeugenden und/oder -verbrauchenden Gerät (1) zugeordnet ist, ein ressourcenspezifisches Messmodul (3), ein gerätespezifische Steuermodul (4) und ein universelles, d.h. für alle Geräte gleichermaßen einsetzbares, einheitliches Kommunikationsmodul (5) enthält und einen IP fähigen Zugang aufweist, die zentrale Steuereinheit (6) Mittel zur Speicherung, Aufarbeitung und Auswertung und zur Bereitstellung an ein anwenderseitiges Kommunikationsendgerät der vom Interface (2) übermittelten Messdaten des Ressourcenerzeugenden und/oder -verbrauchenden Gerätes (1) sowie zu einem, mittels in der zentralen Steuereinheit hinterlegter Aktionen, gesteuertem Eingriff und zur Veränderung des Zustands des dadurch erfassten Ressourcenerzeugenden und/oder -verbrauchenden Gerätes (1) aufweist und zwischen der zentralen Steuereinheit und jedem Interface (2) ein Gateway (9) zwischengeschaltet ist.

12. Kommunikationssystem nach Anspruch 11, **dadurch gekennzeichnet, dass** sich das ressourcenspezifische Messmodul (3), das gerätespezifische Steuermodul (4) und das universelle Kommunikationsmodul (5) auf einem Board befinden.

13. Kommunikationssystem nach Anspruch 12, **dadurch gekennzeichnet, dass** das Interface (2) eines Ressourcen-erzeugenden und/oder -verbrauchenden Gerätes (1) Mittel zum direkten Empfang und zur direkten Weitergabe von Daten von und zu jeder anderen dieser Interfaces (2) aufweist.

14. Kommunikationssystem nach Anspruch 12 oder 13, **dadurch gekennzeichnet, dass** das Mittel zum direkten Empfang und zur direkten Weitergabe von Daten von einem Interface (2) zu jedem anderen dieser Interfaces (2) eine Funkverbindung (12), eine Feldbusverbindung oder eine Verbindung nach dem IP ist.

15. Kommunikationssystem nach einem der Ansprüche 12 bis 14, **dadurch gekennzeichnet, dass** es eine direkte und eineindeutige Zuordnung des Ressourcen-erzeugenden und/oder -verbrauchenden Gerätes (1) zu einem Benutzerkonto aufweist.

16. Kommunikationssystem nach einem der Ansprüche 12 bis 15, **dadurch gekennzeichnet, dass** es Mittel zur zentralen Aktualisierung der Firmware auf Ressourcenerzeugenden und/oder -verbrauchenden Geräten (1) und enthält.

17. Kommunikationssystem nach einem der Ansprüche 12 bis 16, **dadurch gekennzeichnet, dass** es sich bei den von dem Ressourcen-erzeugenden und/oder -verbrauchenden Gerät (1) erzeugten und/oder verbrauchten Ressourcen um mindestens eine der folgenden Ressourcen Energie, Gas, Öl, Wasser und Wärme handelt.

18. Kommunikationssystem nach einem der Ansprüche 12 bis 17, **dadurch gekennzeichnet, dass** das zu messende und/oder zu steuernde Ressourcen-erzeugende und/oder -verbrauchende Gerät (1) ein Personen- oder Gütertransportmittel, Haushaltsgerät, und/oder Produktionsanlage in öffentlichen Gebäuden, privaten Haushalten, in Handel und/oder in Produktionsbetrieben ist.

## Claims

1. Method for communicating between a resource-generating and/or resource-consuming device (1) and a user communication terminal (7), the user communication terminal (7) being connected to the resource-generating and/or resource-consuming device (1) via a central control unit (6), with the interposition of a network, and via an interface (2), the central control unit (6) retrieving data from the interface (2) via the Internet using the Internet protocol, IP, and/or transmitting data to the interface (2) using the IP, the interface (2) which comprises a resource-specific measuring module (3), a device-specific control module (4) and a universal communication module being assigned to a single resource-generating and/or resource-consuming device (1), and a separate IP address being assigned to a resource-generating or resource-consuming device (1), the connection between the interface (2) and the central control unit (6) being effected via a first IP-based wireless connection (10) to a gateway (9) and the connection to the Internet being effected via said gateway using a wired connection (11), the connection between the central control unit (6) and the user communication terminal (7) being effected via a second IP-based wireless connection (10), the central controller (6) storing and evaluating the data and providing the evaluated data for transmission to a user communication terminal (7) which is connected to the resource-generating and/or resource-consuming device (1) via the central controller (6), and the state of the resource-generating and/or resource-consuming device (1) being changed on the basis of the results of the automatic evaluation of the data using actions stored in the central control unit (6).

2. Method according to Claim 1, **characterized in that**, if more than one resource-generating and/or resource-consuming device (1) and its interfaces (2) are present, each of these interfaces (2) communicates directly with every other interface and receives and forwards data in the process.

3. Method according to Claim 2, **characterized in that** communication between the interfaces (2) of the resource-generating and/or resource-consuming devices (1) is set up via a radio network, a field bus connection or via the Internet.

4. Method according to one of Claims 1 to 3, **characterized in that**, in order to retrieve data from the interface (2) and/or to transmit data to the interface (2) of a resource-generating and/or resource-consuming device (1), operation is carried out according to the IPv6 Internet protocol or a higher version.

5. Method according to one of Claims 1 to 4, **characterized in that** the central control unit (6) processes and evaluates the measurement data obtained from the interface (2) of a resource-generating and/or resource-consuming device (1) and can change the state of the remotely detected device to be remotely controlled as a result of the evaluation or on the basis of manually obtained inputs.

6. Method according to one of Claims 1 to 5, **characterized in that** a user account is assigned to each device via its interface (2) and the central control unit (6) and vice versa.

7. Method according to one of Claims 1 to 6, **characterized in that** the information security of the connection, the allocation of access rights and the identification of users (8) are ensured by means of an asymmetrical encryption method.

8. Method according to one of Claims 1 to 7, **characterized in that** resources consumed or generated with the interface (2) assigned to the resource-generating and/or resource-consuming device (1) are measured in a resource-specific manner, are controlled in a device-specific manner and are communicated universally, that is to say always with the same means.

9. Method according to one of Claims 1 to 8, **characterized in that** the consumed and/or generated resources are measured in an event-based manner.

10. Method according to one of Claims 1 to 9, **characterized in that** at least one of the following resources is measured in this case: electrical energy, gas, oil, water, heat and cold.

11. Communication system which contains a resource-generating and/or resource-consuming device (1), an interface (2), a central control unit (6) and a user communication terminal (7), the interface (2) being assigned only to this one resource-generating and/or resource-consuming device (1), containing a resource-specific measuring module (3), a device-specific control module (4) and a universal, that is to say equally usable for all devices, standard communication module (5) and having IP-enabled access, the central control unit (6) having means for storing, processing and evaluating the measurement data from the resource-generating and/or resource-consuming device (1) which are transmitted from the interface (2) and for providing said measurement data to a user communication terminal and for controlled intervention using actions stored in the central control unit and for changing the state of the resource-generating and/or resource-consuming device (1) detected thereby, and a gateway (9) being interposed between the central control unit and each interface (2).

12. Communication system according to Claim 11, **characterized in that** the resource-specific measuring module (3), the device-specific control module (4) and the universal communication module (5) are situated on a board.

13. Communication system according to Claim 12, **characterized in that** the interface (2) of a resource-generating and/or resource-consuming device (1) has means for directly receiving and for directly forwarding data from and to every other interface of these interfaces (2).

14. Communication system according to Claim 12 or 13, **characterized in that** the means for directly receiving and for directly forwarding data from an interface (2) to every other interface of these interfaces (2) is a radio link (12), a field bus connection or an IP connection.

15. Communication system according to one of Claims 12 to 14, **characterized in that** it has a direct and unique assignment of the resource-generating and/or resource-consuming device (1) to a user account.

16. Communication system according to one of Claims 12 to 15, **characterized in that** it contains means for centrally updating the firmware on resource-generating and/or resource-consuming devices (1).

17. Communication system according to one of Claims 12 to 16, **characterized in that** the resources generated and/or consumed by the resource-generating and/or resource-consuming device (1) are at least one of the following resources: energy, gas, oil, water and heat.

18. Communication system according to one of Claims 12 to 17, **characterized in that** the resource-generating and/or resource-consuming device (1) to be measured and/or controlled is a means of passenger transport or a means of goods transport, a household appliance, and/or a production plant in public buildings, private households, in commerce and/or in production facilities.

## Revendications

1. Procédé de communication entre un dispositif générateur et/ou utilisateur de ressources (1) et un dispositif émetteur de communication côté utilisateur (7), dans lequel le dispositif émetteur de communication coté utilisateur (7) est connecté par l'intermédiaire d'une unité de commande centrale (6) par interconnexion d'un réseau et par l'intermédiaire d'une interface (2) au dispositif générateur et/ou utilisateur de ressources (1), dans lequel des données sont demandées à l'unité de commande centrale (6) par l'intermédiaire de l'Internet en provenance de l'interface (2) en utilisant le protocole Internet, IP, et/ou des données sont transmises à l'interface (2) en utilisant le protocole IP, dans lequel l'interface (2), qui comporte un module de mesure spécifique des ressources (3), un module de commande spécifique des dispositifs (4) et un module de communication universel, est associée à un dispositif générateur et/ou utilisateur de ressources unique (1) et une adresse IP propre est associée au dispositif générateur ou utilisateur de ressources (1), la liaison entre l'interface (2) et l'unité de commande centrale (6) s'effectue par l'intermédiaire d'une première liaison sans fil de type IP (10) à une passerelle (9) et par l'intermédiaire de celles-ci sur l'Internet par l'intermédiaire d'une liaison filaire (11), la liaison entre l'unité de commande centrale (6) et le dispositif émetteur de communication côté utilisateur (7) s'effectue par l'intermédiaire d'une seconde liaison sans fil de type IP (10), l'unité de commande centrale (6) stocke et évalue les données et fournit les données évaluées pour leur transmission à un dispositif émetteur de communication côté utilisateur (7), qui est connecté par l'intermédiaire de l'unité de commande centrale (6) au dispositif générateur et/ou utilisateur de ressources (1), et une modification d'état du dispositif générateur et/ou utilisateur de ressources (1) est effectuée au moyen d'actions stockées dans l'unité de commande centrale (6) en fonction des résultats de l'évaluation automatique des données.

2. Procédé selon la revendication 1, **caractérisé en ce que** lors de la présence de plus d'un dispositif générateur et/ou utilisateur de ressources (1) et de son interface (2), chacune de ces interfaces (2) communique directement avec chacune des autres et ainsi, reçoit et retransmet des données.

3. Procédé selon la revendication 2, **caractérisé en ce que** la communication entre les interfaces (2) des dispositifs générateurs et/ou utilisateurs de ressources (1) est basée sur un réseau radio, une liaison par bus de terrain ou par l'Internet.

4. Procédé selon l'une quelconque des revendications 1 à 3, **caractérisé en ce que** la demande de données en provenance de l'interface (2) et/ou l'envoi de données à l'interface (2) d'un dispositif générateur et/ou utilisateur de ressources (1) fonctionne conformément au protocole Internet version IPv6 ou supérieure.

5. Procédé selon l'une quelconque des revendications 1 à 4, **caractérisé en ce que** l'unité de commande centrale (6) traite les données de mesure obtenues de l'interface (2) d'un dispositif générateur et/ou utilisateur de ressources (1), et les évalue et, suite à l'évaluation ou sur la base d'entrées obtenues manuellement permet de modifier l'état du dispositif détecté à distance ou commandé à distance.

6. Procédé selon l'une quelconque des revendications 1 à 5, **caractérisé en ce qu'**un compte utilisateur est affecté à chaque dispositif par l'intermédiaire de son interface (2) et de l'unité de commande centrale (6) et inversement.

7. Procédé selon l'une quelconque des revendications 1 à 6, **caractérisé en ce que** la sécurité des informations de la liaison, l'attribution de droits d'accès et l'identification des utilisateurs (8) sont assurées par un procédé de cryptage asymétrique.

8. Procédé selon l'une quelconque des revendications 1 à 7, **caractérisé en ce que** les ressources utilisées ou générées sont mesurées de manière spécifique des ressources au moyen de l'interface (2) associée au dispositif générateur et/ou utilisateur de ressources (1), **en ce qu'**elles sont commandées de manière spécifique des dispositifs ou des appareils et **en ce qu'**elles sont communiquées de manière universelle, c'est-à-dire à l'aide de moyens toujours identiques.

9. Procédé selon l'une quelconque des revendications 1 à 8, **caractérisé en ce que** la mesure des ressources utilisées et/ou générées s'effectue sur la base d'événements.

10. Procédé selon l'une quelconque des revendications 1 à 9, **caractérisé en ce que**, en tant que l'au moins l'une des ressources, on mesure de l'énergie électrique, du gaz, du pétrole, de l'eau, de la chaleur et du froid.

11. Système de communication comportant un dispositif générateur et/ou utilisateur de ressources (1), une interface (2), une unité de commande centrale (6) et un dispositif émetteur de communication côté utilisateur (7), dans lequel l'interface (2) n'est associée qu'audit dispositif générateur et/ou utilisateur de ressources (1), en ce qu'il comprend un module de mesure spécifique des ressources (3), un module de commande spécifique des dispositifs (4) et un module de communication normalisé (5) universel, c'est-à-dire pouvant être monté de la même manière dans tous les dispositifs, et en ce qu'il comporte un accès compatible IP, en ce que l'unité de commande centrale (6) comprend des moyens destinés à stocker, traiter, évaluer et fournir à un dispositif émetteur de communication côté utilisateur les données de mesure transmises par l'interface (2) du dispositif générateur et/ou utilisateur de ressources (1), et destiné à un accès commandé au moyen d'actions stockées dans l'unité de commande centrale et à modifier l'état du dispositif générateur et/ou utilisateur de ressources (1) ainsi détecté et en ce qu'une passerelle (9) est interconnectée entre l'unité de commande centrale et chaque interface (2).

12. Système de communication selon la revendication 11, **caractérisé en ce que** le module de mesure spécifique des ressources (3), le module de commande spécifique des dispositifs (4) et le module de communication universel (5) se trouvent sur une carte.

13. Système de communication selon la revendication 12, **caractérisé en ce que** l'interface (2) d'un dispositif générateur et/ou utilisateur de ressources (1) comprend un moyen destiné à la réception directe et à la retransmission directe de données depuis et vers chaque autre desdites interfaces (2).

14. Système de communication selon la revendication 12 ou 13, **caractérisé en ce que** le moyen destiné à la réception directe et à la retransmission directe de données d'une interface de données (2) vers chaque autre desdites interfaces (2) est une liaison radio (12), une liaison par bus de terrain ou une liaison de type IP.

15. Système de communication selon l'une quelconque des revendications 12 à 14, **caractérisé en ce qu'**il comprend une affectation directe et univoque du dispositif générateur et/ou utilisateur de ressources (1) à un compte utilisateur.

16. Système de communication selon l'une quelconque des revendications 12 à 15, **caractérisé en ce qu'**il comporte des moyens destinés à la mise à jour centralisée du microcode sur des dispositifs générateurs et/ou utilisateurs de ressources (1).

17. Système de communication selon l'une quelconque des revendications 12 à 16, **caractérisé en ce que** les ressources générées et/ou utilisées par le dispositif générateur et/ou utilisateur de ressources (1) sont au moins l'une des ressources suivantes : de l'énergie, du gaz, du pétrole, de l'eau et de la chaleur.

18. Système de communication selon l'une quelconque des revendications 12 à 17, **caractérisé en ce que** le dispositif générateur et/ou utilisateur de ressources (1) à mesurer et/ou à commander est un moyen de transport de personnes ou de marchandises, un appareil domestique et/ou une installation de production dans des bâtiments publics, des foyers privés, dans des commerces et/ou dans des entreprises de production.
